# EUROPEAN PATENT APPLICATION

(11) **EP 4 718 446 A1**
(43) Date of publication of application: **01.04.2026**
(21) Application number: 25205853.2
(22) Date of filing: 30.09.2025
(51) Int. Cl.: G10K 11/178

(54) **ACTIVE NOISE CANCELLATION OF ENGINE NOISE AT SLEEPING LOCATIONS ON AIRCRAFT**

(30) Priority: 30.09.2024 US 202463701191 P
(71) Applicant: Gulfstream Aerospace Corporation, Savannah, GA 31402 (US)
(72) Inventor: Wang, Tongan, Savannah, 31402 (US); Bohanan, Scott, Savannah, 31402 (US); Hale, Jennifer, Savannah, 31402 (US)
(74) Representative: Ingrassia, Fisher & Lorenz UK Ltd.

(57) **Abstract**

In accordance with certain aspects, noise cancellation systems and methods are utilized to mitigate engine tonal noise at sleeping locations in the aircraft cabin space. In one embodiment, an onboard noise cancellation system is provided that includes a plurality of microphones, the plurality of microphones, and a plurality of speakers, and a noise cancellation circuit. In this embodiment the plurality of speakers are arranged proximate to a bed in the sleeping area of the aircraft cabin. Likewise, the plurality of speakers are arranged proximate to the proximate to the bed in the sleeping area. The noise cancellation circuit is further coupled to the plurality of speakers, and the noise cancellation circuit is configured to drive the plurality of speakers to generate noise cancellation audio to at least partially cancel engine noise in a region above the bed.

## Description

### TECHNICAL FIELD

Embodiments of the subject matter described herein relate generally to systems and related processor-based methodologies that reduce undesirable engine noise onboard an aircraft.

### BACKGROUND

One important issue in air travel is passenger comfort. A variety of factors can impact passenger comfort, including the levels of ambient noise in the cabin and other areas of the aircraft. This is particularly important for long range air travel, where passengers will commonly have a strong need for sleep.

One source of ambient noise in the cabin is the engine(s). Specifically, modern aircraft engines generate tonal noise that can significantly impact passenger comfort in the cabin. This is especially true for aircraft that include specific sleeping locations in the aircraft, as those locations are commonly relatively near the engines. For example, in many modern business class aircraft there are specific sleeping areas in the cabin area located near or between the engines. Because of the proximate location of these sleeping locations and the noise caused by the operating engines, some passengers may find it difficult to sleep in these specific sleeping areas.

### SUMMARY

In accordance with certain embodiments of the invention, noise cancellation systems and methods are utilized to mitigate engine tonal noise at specified locations on the aircraft. In accordance with exemplary embodiments, the noise cancellation system employs active noise cancellation techniques to mitigate engine tonal noise at sleeping locations in the aircraft cabin space.

In one embodiment, an onboard noise cancellation system is provided that includes a plurality of microphones, a plurality of speakers, and a noise cancellation circuit. In this embodiment the plurality of speakers are arranged proximate to a bed in the sleeping area of the aircraft cabin. Likewise, the plurality of speakers are arranged proximate to the proximate to the bed in the sleeping area.

In this embodiment, the noise cancellation circuit is coupled to the plurality of microphones to receive engine noise signals indicative of engine noise in the sleeping area. The noise cancellation circuit is further coupled to the plurality of speakers, and the noise cancellation circuit is configured to drive the plurality of speakers to generate noise cancellation audio to at least partially cancel engine noise in a region above the bed.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The drawings described herein are for illustrative purposes only of selected embodiments and not all possible implementations. The particular choice of drawings is not intended to limit the scope of the present disclosure.
FIG. 1 is a top down view of an exemplary aircraft and noise cancellation system in accordance with the embodiments described herein;
FIG. 2 is a schematic view of a noise cancellation system in accordance with the embodiments described herein;
FIG. 3 is a schematic view of a noise cancellation system in accordance with the embodiments described herein;
FIG. 4 is a perspective view of an aircraft interior feature with a plurality of speakers, microphones, and head position sensors in accordance with the embodiments described herein; and
FIG. 5 is a perspective view of a sleeping location in an aircraft with a plurality of speakers, microphones, and head position sensors proximate to a bed in a sleeping location in accordance with the embodiments described herein.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

In accordance with certain embodiments of the invention, onboard aircraft systems and methods are utilized to mitigate engine tonal noise at specified locations on the aircraft. In accordance with exemplary embodiments, the onboard system employs active noise cancellation (ANC) techniques to mitigate engine tonal noise at sleeping locations in the aircraft cabin space. In general, active noise cancellation techniques use destructive interference to cancel out unwanted sounds and thus reduce the sound heard by listener. As will be described in greater detail below, active noise cancellation is well suited to attenuate the type of deterministic tonal noise created by aircraft engines.

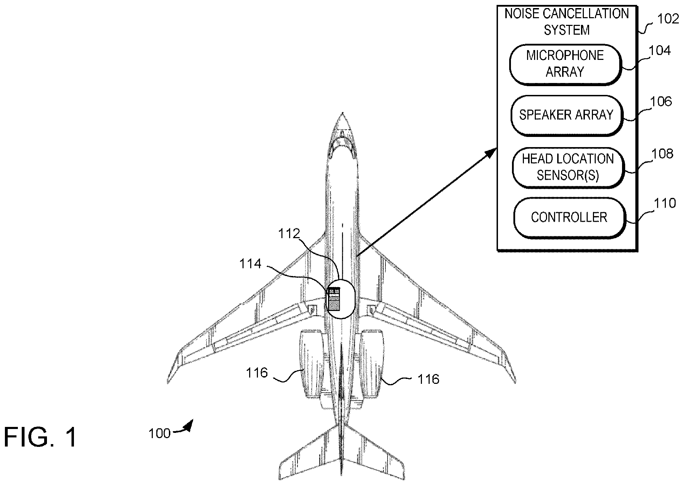

Turning now to FIG. 1, an exemplary aircraft 100 is illustrated. In this illustrated example, the aircraft 100 is a modern business class aircraft, but it should be noted that the various embodiments described herein can be applied to a wide variety of different types of aircraft, including larger commercial and cargo aircraft.

In accordance with the embodiments described herein, the aircraft 100 includes noise cancellation system 102 that is illustrated schematically. The noise cancellation system 102 includes a microphone array 104, a speaker array 106, a head location sensor 108, and a controller 110. Also, in FIG. 1 a cutout in the illustrated aircraft 100 shows a sleeping location 112 inside the cabin, where the sleeping location 112 includes a bed 114. Notably, in this illustrated example the sleeping location 112 and the bed 114 are in a relatively close proximity to the engines 116 of the aircraft 100. This close proximity can result in relatively high levels of engine noise in the sleeping location 112, and these high levels of noise can sometimes prevent passengers from sleeping well during flight.

To alleviate this, noise cancellation system 102 described herein can be implemented to employ active noise cancellation techniques to mitigate engine noise, and in particular engine tonal noise in the sleeping location 112. Furthermore, in some embodiments the noise cancellation system 102 can be implemented to employ head locating techniques to more precisely locate the position of sleeping passenger's head in the sleeping location 112. With the position of the passenger's head located, the noise cancellation system 102 can more effectively mitigate engine noise at or about the particular identified location of the passenger's head. Specifically, in these embodiments the noise cancellation system 102 can be implemented to generate and direct the noise cancellation audio to the identified regions above the bed 114 where the head is located and thus increase the effectiveness of the noise cancellation for the passenger.

In general, the controller 110 includes one or more noise cancellation circuits that are coupled to the plurality of microphones in the microphone array 104. In general, the controller 110 can be implemented with any suitable combination of circuits, processors, logic devices, hardware and/or software suitable to perform active noise cancellation. The microphone array 104 is adapted to capture engine noise in the sleeping area 112 and generate engine noise signals indicative of engine noise in the sleeping area 112. These engine noise signals are passed to the controller 110 where they are used for active noise cancellation of the engine noise. Specifically, the engine noise signals are used by the controller 110 in generating noise cancellation audio signals used to at least partially cancel the engine noise and thus reduce the amount of engine noise apparent to passengers in the sleeping area 112.

Specifically, the controller 110 is further coupled to the plurality of speakers in the speaker array 106, and the controller 110 is configured to drive the plurality of speakers to generate noise cancellation audio needed to at least partially cancel engine noise in the sleeping area 112. In some embodiments, the noise cancellation audio is generated and directed to at least partially cancel engine noise in a region above the bed 114 where a sleeping person's head is likely to be located.

In some embodiments, the noise cancellation system 102 further utilizes engine speed in canceling engine noise. For example, in such embodiments one or more engine sensors can be used to indicate the engine speed(s) during operation of the aircraft. Because the tonal noise of an aircraft engine can change with engine speed, providing a measure of the engine speed of an aircraft to the noise cancellation system 102 can be used to improve the effectiveness of the noise cancellation audio by facilitating the generation and tuning of the audio to better cancel the engine noise in the region above the bed 114. Examples of such engine sensors include engine tachometers that are configured to measure the rotational speed (e.g., RPM)_of an aircraft engine. Detailed examples of such embodiments will be discussed below.

Furthermore, in this illustrated embodiment the noise cancellation system 102 includes at least one head location sensor 108. In general, the head location sensor 108 is coupled to the controller 110 and configured to indicate the head location of person sleeping in the region above the bed 114. The controller 110 can then use the indicated head location to facilitate engine noise cancellation in and about the indicated head location. Specifically, the noise cancellation audio can be generated to maximize noise cancellation in the region about the indicated head location. Furthermore, in some embodiments the noise cancellation audio can be directed to the region about the indicated head location, again to maximize the noise cancellation about the indicated head location. As will be discussed in greater detail below, a variety of different types of sensors can be used as the head location sensor 108, including thermal sensors and LIDAR sensors, and combinations thereof. As specific examples, the head location sensor 108 can be implemented with an array of thermal sensors directed to the areas of likely head locations in a region above the bed. In some embodiments an array of such head location sensors 108 can be arranged in the sleeping area to indicate the head location of a person or persons sleeping in the region above the bed 114.

As will be described in greater detail below, in various embodiments the microphone array 104, speaker array 106 and/or head location sensor(s) 108 can be positioned in different locations of the sleeping area 112. Additionally, the microphone array 104, speaker array 106 and/or head location sensor(s) 108 can be mounted to or integrated with different features in the sleeping area 112.

As specific examples, the microphone array 104, speaker array 106 and/or head location sensor(s) 108 can be mounted to or integrated with a headboard, bulkhead, side panel, personal service unit (PSU), and/or closeout panel within the aircraft sleeping area 112. As other examples, the microphone array 104, speaker array 106 and/or head location sensor(s) 108 can be affixed to bedding with the sleeping area, such as a pillow or mattress. In each of these embodiments the microphone array 104, speaker array 106 and/or head location sensor(s) 108 would each be positioned and pointed in direction(s) that facilitates effective noise cancellation in the regions where the passenger's head is likely to be located when sleeping. For example, each of these elements would be typically pointed at or otherwise directed to a region above the bed 114 and near the end of the bed 114 where the person's head would typically be located during sleep.

It should be noted that in some embodiments the microphone array 104, speaker array 106 and head location sensor(s) 108 can be positioned together (e.g., integrated on the headboard or bulkhead together) or these elements can be positioned separately (e.g., the microphone array 104 mounted to headboard while the speaker array 106 is mounted to a bulkhead). Furthermore, in some embodiments the microphones, speakers and/or head location sensors can be mounted or integrated on multiple different features and in multiple different locations. Thus, some microphones/speakers/sensors can be located on the bulkhead while other microphones/speakers/sensors are located on the personal service unit.

In one specific example, the plurality of microphones in the microphone array 104 and/or the plurality of speakers in the speaker array 106 are arranged on a bulkhead proximate to the bed 114, and the plurality of microphones and the plurality of speakers are directed toward the region above the bed 114 where a persons head is likely to be present when sleeping on the bed. In another specific example, the plurality of microphones in the microphone array 104 and/or the plurality of speakers in the speaker array 106 are arranged on a headboard proximate to the bed 114, and the plurality of microphones and the plurality of speakers are directed toward the region above the bed 114 where a person's head is likely to be present when sleeping on the bed.

In another specific example, the plurality of microphones in the microphone array 104 and/or the plurality of speakers in the speaker array 106 are arranged on a personal service unit proximate to the bed 114, and the plurality of microphones and the plurality of speakers are directed toward the region above the bed 114 where a person's head is likely to be present when sleeping on the bed. In another specific example, the plurality of microphones in the microphone array 104 and/or the plurality of speakers in the speaker array 106 are arranged on a closeout panel proximate to the bed 114, and the plurality of microphones and the plurality of speakers are directed toward the region above the bed 114 where a person's head is likely to be present when sleeping on the bed.

Next, it should be noted that in some embodiments the plurality of speakers in the speaker array 106 are conventional acoustic speakers. However, in other embodiments the plurality of speakers in the speaker array 106 can be implemented with steerable speakers that facilitate directional control of the audio output.

For example, in some embodiments the speakers can be implemented with an ultrasonic transducer array that directs the system audio in a narrow ultrasonic beam. In such embodiments the ultrasonic beam can employ an ultrasonic carrier wave at a frequency that is inaudible to the human ear. In such an embodiment the noise cancellation audio would be modulated upon this ultrasonic carrier wave and thus travel with the carrier wave in the direction of the beam. As the beam passes through air molecules, the modulated wave becomes naturally demodulated through interaction with the air molecules. Because of this natural demodulation, the noise cancellation audio becomes audible and thus effective to cancel the engine noise. Such ultrasonic transducer arrays can further provide for directing or steering of the ultrasonic beam in specific desirable directions. The use of such steerable transducer arrays can allow such noise cancellation audio to be directed toward the region about the head of the sleeping passenger, and thus can improve the effectiveness of the engine noise cancellation.

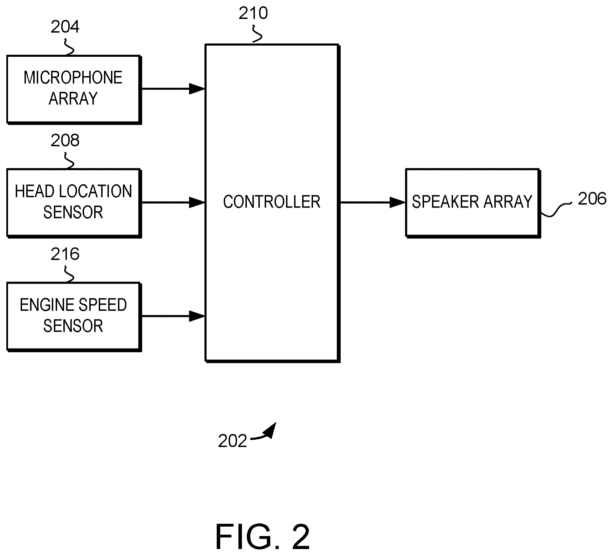

Turning now to FIG. 2, an exemplary noise cancellation system 202 is illustrated showing an exemplary coupling between elements. In this illustrated embodiment the noise cancellation system 202 includes a microphone array 204, a speaker array 206, a head location sensor 208, an engine speed sensor 216 and a controller 210. In accordance with the embodiments described herein, the noise cancellation system 202 can be implemented to employ active noise cancellation techniques to mitigate engine noise, and in particular engine tonal noise in the sleeping location of an aircraft.

In this illustrated embodiment the noise cancellation system 202 employs head locating techniques using head location sensor 208 to more precisely locate the position of sleeping passenger's head. With the position of the passenger's head located, the noise cancellation system 202 can more effectively mitigate engine noise by generating and directing the noise cancellation audio to the identified regions above the bed where the head is located.

Furthermore, in this illustrated embodiment the noise cancellation system 202 further utilizes engine speed provided by the engine speed sensor 216 in canceling engine noise. Because the tonal noise of an aircraft engine can change with engine speed, providing the engine speed from the engine speed sensor 216 to the controller 210 facilitates the generation and tuning of noise cancellation audio to better cancel the engine noise in the areas where a person's head is located.

In general, the controller 210 includes one or more noise cancellation circuits processors, logic devices, hardware and/or software suitable for noise cancellation. The controller 210 is coupled to the plurality of microphones in the microphone array 204. The microphone array 204 is adapted to capture engine noise in the sleeping area 212 and generate engine noise signals indicative of engine noise in the sleeping area 212. These engine noise signals are passed to the controller 210 where they are used in generating noise cancellation audio signals. The noise cancellation audio signals can then be used to drive a plurality of speakers in the speaker array 206.

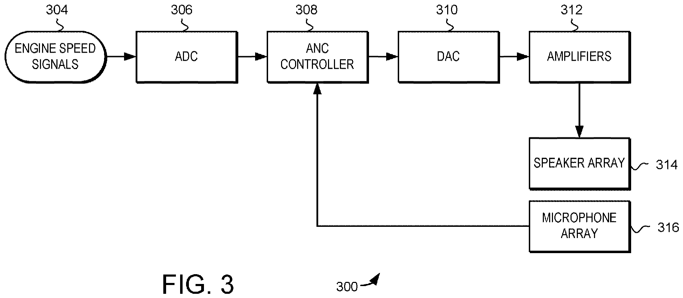

Turning now to FIG. 3, another embodiment of an exemplary noise cancellation system 300 is illustrated. FIG. 3 depicts one suitable implementation that is configured in accordance with certain embodiments of the invention. In this illustrated embodiment the noise cancellation system 300 includes an analog-to-digital converter (ADC) 306, an active noise cancellation (ANC) controller 308, a digital-to analog converter (DAC) 310, amplifiers 312, speaker array 314, and microphone array 316.

Again, in this embodiment the noise cancellation system 300 is implemented to use active noise cancellation techniques to mitigate noise generated by the engine at sleeping locations (e.g. sleeping location 112 in FIG. 1) in an aircraft cabin environment. As described above, engine tonal noise in the cabin can significantly impact cabin comfort, especially at sleeping locations. FIG. 3 shows one suitable implementation of a noise cancellation system that is configured in accordance with certain embodiments of the invention.

In FIG. 3, engine speed signals 304 are provided to the analog-to-digital converter 306. As was described above, in various embodiments the engine speed signals can comprise engine tachometer signals that provide engine RPM or other suitable data for one or more engines. The analog-to-digital converter 306 performs analog-to-digital conversion on the engine speed signals (or on related analog signals that are based on, derived from, or otherwise correlated to the engine speed signals). The converted engine speed signals are then provided to the ANC controller 308.

In general, the ANC controller 308 comprises a suitably configured and programmed controller to generate transducer drive signals in the digital domain for noise cancellation (or stated another way, to generate the noise cancellation signals). The ANC controller 308 passes the generated transducer drive signals to the digital-to-analog converter (DAC) 310. The digital-to-analog converter 310 converts the digital transducer drive signals into the analog domain using a suitable digital-to-analog conversion technique, generating one or more analog drive signals. The digital-to-analog converter 310 outputs the converted analog drive signals to the amplifier 312, and the amplifier 312 amplifies the analog drive signals as needed to drive speakers. The amplified analog drive signals are outputted from the amplifier 312 and passed to the speaker array 314, where it drives one or more speakers in the speaker array 314.

The microphone array 316 is preferably located at or near the sleeping location of passengers on the aircraft. The microphone array 316 suitably includes one or more error microphones located at or the bed on the sleeping area. For example, the at least one microphone array 316 can be mounted at or near the typical sleeping location of a passenger.

So configured, the microphones in the microphone array 316 generate audio signals that correspond to sounds in the environment. During operation of the aircraft these audio signals would correspond to the tonal engine noise that is present in the sleeping location, and more specifically in the region above the bed where a passenger's head is likely to be located. These audio signals are fed back to the ANC controller 308 where they are processed in an appropriate manner and used to generate the digital transducer drive signals for the speaker array 314. In this regard, the digital transducer drive signals can be generated in response to the engine speed signals 304 and information and in response to the noise/sound information obtained by the microphone(s) in the microphone array 316. Specifically, the ANC controller 308 may use adaptive ANC algorithms that are implemented to analyze the noise signals received by the microphones in the microphone array 316 and/or the engine speed signals. Responsive to this, the adaptive ANC algorithms generate one or more digital transducer drive signals that will be an inversion and/or phase shift of the detected audio signals that represent the engine noise in the sleeping location. When these digital transducer drive signals are converted to analog and used to drive speakers in the speaker array 314, the speakers will create sounds that will result in destructive interference with the engine noise in the sleeping location and thus reduce the volume of perceivable engine noise in the sleeping location.

It should be noted that engine noise in a sleeping location may not exhibit uniform distribution. Thus, in these embodiments multiple noise cancelling speakers may be used in the speaker array 314 to minimize the noise at all sleeping locations and/or any designated zone, region, or location within the aircraft cabin. Likewise, in some embodiments, multiple speakers in the speaker array 314 and multiple error microphones in the microphone array 316 can be strategically placed around the sleeping locations. In these embodiments a suitably designed and implemented Multiple-Input-Multiple-Output (MIMO) ANC algorithm can be used to adaptively control the multiple speakers in the speaker array 314 to minimize noise at the multiple locations.

As described above, the engine speed signals 304 are provided to the ANC controller 308 through the analog-to-digital converter 306. These engine speed signals 304 can comprise engine tachometer signals that provide engine RPM data for one or more engines. Because the noise generated by the engines is related to the engine RPM, the engine speed signals 304 can be used to more effectively cancel the tonal noise produced by the engines. Specifically, the engine speed signals 304 are associated with the low pressure and/or high pressure compressors of jet engines and can be leveraged to enhance the noise reduction performance. For example, in some embodiments the noise cancellation system 300 is configured to primarily target fundamental tones produced by the engines for global noise reduction. However, in other embodiments the noise cancellation system 300 may be configured to also cancel higher order harmonics, although the effective zone of such cancellation may be reduced.

Furthermore, the noise cancellation system 300 can facilitate noise cancellation of noise associated with engine interactions of multiple engines. Specifically, the multiple engines on an aircraft may interface with each other, creating a "beating" behavior in the noise generated. Such "beating" behavior in the engine noise can occur when the noise from different engines has nearly identical frequency and the sound waves go in and out of phase. Using the engine speed signals 304 for multiple engines in generating the noise cancellation signals can assist in reducing this type of noise in the sleeping area. Thus, in some embodiments the noise cancellation system 300 can be suitably configured and operated to effectively cancel noise from multiple engines using speed signals 304 from the multiple engines.

In one specific embodiment, the engine speed sensors from all engines on an aircraft can be used as the reference signals for a MIMO ANC algorithm used by the ANC controller 308. In such an embodiment each engine speed signal will provide frequency information that can be considered by the ANC algorithm to cancel corresponding engine noise in the sleeping location. In such an embodiment the engine speed signals will not be affected by other noise inside the cabin, including the noise generated by the speakers. This can reduce or eliminate the requirement for acoustic feedback neutralization.

As one specific example, the ANC controller 308 uses a FxLMS noise cancellation algorithm to cancel noise at or near the locations of the microphones. However, in other embodiments more advanced algorithms may be used to cancel noise at the head locations even when the microphones are installed away from the head locations. Such an algorithm can allow passengers to move more around freely on the bed while maintaining effective noise cancellation.

In some embodiments the noise cancellation system 300 may be implemented to further utilize one or more head location sensors. In these embodiments the head location sensors are adapted to sense and indicate the head location of person sleeping in the sleeping location. The ANC controller 308 can then use the indicated location of the person's head to facilitate improved engine noise cancellation in and about the detected head location(s). Specifically, the ANC controller 308 can be implemented to use to the head location to maximize noise cancellation of the engine noise in the region about the indicated head location.

As was discussed above, a variety of different types of sensors can be used as head location sensors, including thermal sensors and LIDAR sensors, and combinations thereof. In some embodiments an array of such head location sensors can be arranged in the sleeping area to indicate the head location of a person or persons sleeping in the region above the bed.

Further, the ANC controller 308 can be operated to use the indicated head location sensors to adapt and respond in a quick manner as passengers move their head or pillow locations or orientations.

In various embodiments the microphone array 316, speaker array 314 and/or head location sensor(s) can be positioned in a variety of different locations of the sleeping area. Additionally, the microphone array 316, speaker array 314 and/or head location sensor(s) can be mounted to or integrated with aircraft features, including aircraft features within the cabin. For example, exemplary embodiments of the noise cancellation system 300 may utilize multiple speakers that are positioned generally above and in close proximity to the likely sleeping head positions. Similarly, the noise cancellation system 300 may utilize multiple microphones that are positioned generally above and in close proximity to the likely sleeping head positions.

As specific examples, the microphone array 316, speaker array 314 and/or head location sensor(s) can be mounted to or integrated with a headboard, bulkhead, personal service unit (PSU), and/or closeout panel within the aircraft sleeping area. As other examples, the microphone array 316, speaker array 314 and/or head location sensor(s) can be affixed to bedding with the sleeping area, such as a pillow or mattress. In each of these embodiments the microphone array 316, speaker array 314 and/or head location sensor(s) would each be positioned and pointed in direction(s) that facilitates effective noise cancellation where the passenger's head is likely to be located when sleeping.

Furthermore, in these various embodiments virtual sensing technology may be used by installing microphones away from the sleeping locations, and by using pre-calibrated transfer functions to derive the noise perceived at or near the sleeping locations.

Although the ANC system described here can be used to cancel the engine tonal noise at the fundamental frequency of the tachometer signal, it can be expanded to cancel the harmonics at higher frequencies.

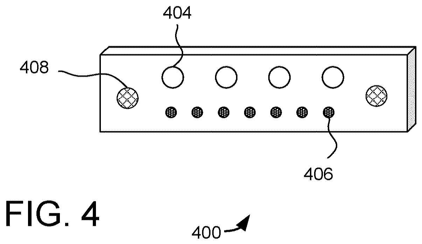

Turning now to FIG. 4, an exemplary aircraft interior feature 400 is illustrated. In this illustrated embodiment, the aircraft interior feature 400 includes a plurality of speakers 404, a plurality of microphones 406, and a plurality of head location sensors 408. It should be noted that while a specific number of speakers, microphones and head location sensors 408 are illustrated in FIG. 4 that this is just one possible example. Specifically, FIG. 4 illustrates a general example of how a plurality of speakers 404, a plurality of microphones 406, and a plurality of head location sensors 408 can be mounted together on a feature 400 in or near the sleeping area of the aircraft

For example, exemplary embodiments of the noise cancellation systems may utilize aircraft interior features 400 such that the plurality of speakers 404, microphones 406 and head location sensors 408 are mounted together above the region where a sleeping person's head would typically be found.

Notably, the feature 400 can be implemented with a variety of different types of devices and structures. As specific examples, the plurality of speakers 404, a plurality of microphones 406, and a plurality of head location sensors 408 can mounted to or integrated with a headboard, sidewall, bulkhead, personal service unit (PSU), and/or closeout panel within the aircraft sleeping area. As other examples, the plurality of speakers 404, a plurality of microphones 406, and a plurality of head location sensors 408 can be affixed to bedding with the sleeping area, such as a pillow or mattress. In each of these embodiments the plurality of speakers 404, a plurality of microphones 406, and a plurality of head location sensors 408 would each be positioned and pointed in direction(s) that facilitates effective noise cancellation where the passenger's head is likely to be located when sleeping.

It should be noted that in some embodiments the plurality of speakers 404, a plurality of microphones 406, and a plurality of head location sensors 408 can be positioned together as illustrated in FIG. 4 (e.g., integrated on the headboard or bulkhead together). In other embodiments the plurality of speakers 404, plurality of microphones 406, and/or plurality of head location sensors 408 can be positioned separately (e.g., the plurality of speakers 404 mounted to a closeout panel while the plurality of microphones 406 is mounted to the headboard and the plurality of head location sensors 408 is mounted to a personal service unit). Furthermore, in some embodiments the speakers 404, microphones 406, and/or head location sensors 408 can be mounted or integrated with multiple locations and devices. Thus, some microphones/speakers/sensors can be located on the bulkhead while other microphones/speakers/sensors are located on the personal service unit.

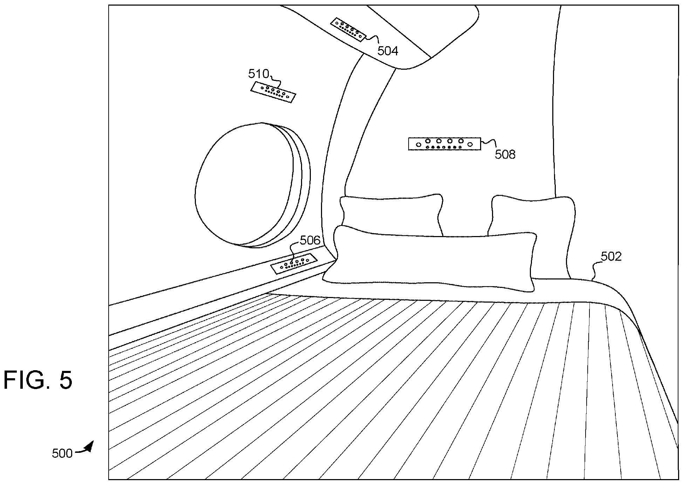

Turning now to FIG. 5, an exemplary sleeping location 500 in an aircraft is illustrated. The sleeping location 500 includes a bed 502 and examples of features 504, 506, 508 and 510 where speakers, microphones, and/or head position sensors can be located.

In these illustrated examples, the features 504 and 506 illustrate possible locations for personal service units (PSU) where speakers, microphones, and/or head position sensors can be located. Likewise, example feature 508 shows an example where speakers, microphones, and/or head position sensors are located on an aircraft bulkhead or closeout panel. Finally, example feature 510 shows an example where speakers, microphones, and/or head position sensors are located on an aircraft sidewall panel.

In each of these examples of FIG. 5 the speakers, microphones, and/or head position sensors would each be positioned and pointed in direction(s) that facilitates effective noise cancellation where the passenger's head is likely to be located when sleeping.

The embodiments described herein thus provide onboard systems that employ active noise cancellation (ANC) techniques to mitigate engine tonal noise at sleeping locations in the aircraft cabin space.

Techniques and technologies may be described herein in terms of functional and/or logical block components, and with reference to symbolic representations of operations, processing tasks, and functions that may be performed by various devices such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software, or the like, various elements of the systems and devices described herein are essentially the code segments or instructions that cause one or more processor devices to perform the various tasks. In certain embodiments, the program or code segments are stored in at least one tangible processor-readable medium, which may include any medium that can store or transfer information. Examples of a non-transitory and processor-readable medium include an electronic circuit, a semiconductor memory device, a ROM, a flash memory, an erasable ROM (EROM), a floppy diskette, a CD-ROM, an optical disk, a hard disk, or the like. For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment as contemplated herein. It should be understood that various changes may be made in the function and arrangement of elements described in an exemplary embodiment without departing from the scope of the invention as set forth in the appended claims.

The present disclosure may be further described by the following Aspects.
**Aspect 1.** In an aircraft that includes a cabin having a bed in a sleeping area, a noise cancellation system comprising:
   a plurality of microphones, the plurality of microphones arranged proximate to the bed in the sleeping area;
   a plurality of speakers, the plurality of speakers arranged proximate to the bed in the sleeping area;
   a noise cancellation circuit, the noise cancellation circuit:
      coupled to the plurality of microphones to receive engine noise signals indicative of engine noise in the sleeping area;
      coupled to the plurality of speakers; and
      where the noise cancellation circuit is configured to drive the plurality of speakers to generate noise cancellation audio to at least partially cancel engine noise in a region above the bed.
**Aspect 2.** The noise cancellation system of Aspect 1, wherein the noise cancellation circuit is configured to utilize an engine speed during operation of the aircraft to adjust the noise cancellation audio to further reduce engine noise in the region above the bed.
**Aspect 3.** The noise cancellation system of Aspect 2, further comprising an engine sensor to indicate the engine speed during operation of the aircraft.
**Aspect 4.** The noise cancellation system of Aspect 3, wherein the engine sensor comprises an engine tachometer.
**Aspect 5.** The noise cancellation system of any one of Aspects 1-4, further comprising a location sensor, the location sensor located proximate to the bed in the sleeping area and configured to indicate a head position of a person sleeping in the region above the bed.
**Aspect 6.** The noise cancellation system of Aspect 5, wherein the location sensor comprises a thermal sensor.
**Aspect 7.** The noise cancellation system of Aspect 5, wherein the location sensor comprises a LIDAR sensor.
**Aspect 8.** The noise cancellation system of any one of Aspects 1-7, wherein the plurality of microphones are arranged on a bulkhead proximate to the bed and wherein the plurality of microphones are directed toward the region above the bed.
**Aspect 9.** The noise cancellation system of any one of Aspects 1-8, wherein the sleeping area further comprises a headboard proximate to the bed, and wherein the plurality of microphones are arranged on the headboard and directed toward the region above the bed.
**Aspect 10.** The noise cancellation system of any one of Aspects 1-9, wherein the plurality of microphones are arranged on a closeout panel proximate to the bed and wherein the plurality of microphones are directed toward the region above the bed.
**Aspect 11.** The noise cancellation system of any one of Aspects 1-10, wherein the plurality of microphones are arranged on a pillow proximate to the bed.
**Aspect 12.** The noise cancellation system of any one of Aspects 1-11, wherein the plurality of microphones are arranged on a personal service unit proximate to the bed and wherein the plurality of microphones are directed toward the region above the bed.
**Aspect 13.** The noise cancellation system of any one of Aspects 1-12, wherein the plurality of speakers are arranged on a bulkhead proximate to the bed.
**Aspect 14.** The noise cancellation system of any one of Aspects 1-13, wherein the sleeping area further comprises a headboard proximate to the bed, and wherein the plurality of speakers are arranged on the headboard.
**Aspect 15.** The noise cancellation system of any one of Aspects 1-14, wherein the plurality of speakers are arranged on a closeout panel proximate to the bed.
**Aspect 16.** The noise cancellation system of any one of Aspects 1-15, wherein the plurality of speakers are arranged on a personal service unit proximate to the bed.
**Aspect 17.** In an aircraft that includes a cabin having a bed in a sleeping area, a noise cancellation method comprising:
   receiving head position data from a head location sensor in the sleeping area;
   receiving engine speed data from the engine sensor during operation of the aircraft;
   receiving engine noise signals indicative of engine noise in the sleeping area; and
   utilizing the engine noise signals, the head position data from the location sensor, and the engine speed data from the engine sensor to drive a plurality of speakers to generate noise cancellation audio to at least partially cancel engine noise about a head position of the person sleeping in a region above the bed.
**Aspect 18**.The noise cancellation method of Aspect 17, wherein the engine sensor comprises an engine tachometer.
**Aspect 19.** The noise cancellation system of Aspect 17, wherein the head location sensor comprises a thermal sensor or a LIDAR sensor.
**Aspect 20.** In an aircraft that includes a cabin having a bed in a sleeping area, a noise cancellation system comprising:
   an engine sensor to determine engine speed during operation of the aircraft;
   a plurality of microphones, the plurality of microphones arranged proximate to the bed in the sleeping area, the plurality of microphones directed toward a region above the bed in the sleeping area;
   a plurality of speakers, the plurality of speakers arranged proximate to the bed in the sleeping area, the plurality of speakers directed toward the region above the bed in the sleeping area;
   a location sensor, the location sensor located proximate to the bed in the sleeping area and configured to determine a head position of a person sleeping in the region above the bed; and
   a noise cancellation controller, the noise cancellation controller:
      coupled to the location sensor to receive head position data from the location sensor;
      coupled to the engine sensor to receive engine speed data from the engine sensor during operation of the aircraft;
      coupled to the plurality of microphones to receive engine noise signals indicative of engine noise in the sleeping area; and coupled to the plurality of speakers; and
      where the noise cancellation controller is configured to utilize the engine noise signals from the plurality of microphones, the head position data from the location sensor, and the engine speed data from the engine sensor to drive the plurality of speakers to generate noise cancellation audio to at least partially cancel engine noise about the head position of the person sleeping in the region above the bed.

## Claims

1. In an aircraft that includes a cabin having a bed in a sleeping area, a noise cancellation system comprising:
a plurality of microphones, the plurality of microphones arranged proximate to the bed in the sleeping area;
a plurality of speakers, the plurality of speakers arranged proximate to the bed in the sleeping area;
a noise cancellation circuit, the noise cancellation circuit:
coupled to the plurality of microphones to receive engine noise signals indicative of engine noise in the sleeping area;
coupled to the plurality of speakers; and
where the noise cancellation circuit is configured to drive the plurality of speakers to generate noise cancellation audio to at least partially cancel engine noise in a region above the bed.

2. The noise cancellation system of claim 1, wherein the noise cancellation circuit is configured to utilize an engine speed during operation of the aircraft to adjust the noise cancellation audio to further reduce engine noise in the region above the bed.

3. The noise cancellation system of claim 2, further comprising an engine sensor to indicate the engine speed during operation of the aircraft, wherein the engine sensor optionally comprises an engine tachometer.

4. The noise cancellation system of any one of claims 1-3, further comprising a location sensor, the location sensor located proximate to the bed in the sleeping area and configured to indicate a head position of a person sleeping in the region above the bed, wherein the location sensor optionally comprises a thermal sensor or a LIDAR sensor.

5. The noise cancellation system of any one of the preceding claims, wherein the plurality of microphones are arranged on a bulkhead proximate to the bed and wherein the plurality of microphones are directed toward the region above the bed.

6. The noise cancellation system of any one of the preceding claims, wherein the sleeping area further comprises a headboard proximate to the bed, and wherein the plurality of microphones are arranged on the headboard and directed toward the region above the bed.

7. The noise cancellation system of any one of the preceding claims, wherein the plurality of microphones are arranged on a closeout panel proximate to the bed and wherein the plurality of microphones are directed toward the region above the bed.

8. The noise cancellation system of any one of the preceding claims, wherein the plurality of microphones are arranged on a pillow proximate to the bed.

9. The noise cancellation system of any one of the preceding claims, wherein the plurality of microphones are arranged on a personal service unit proximate to the bed and wherein the plurality of microphones are directed toward the region above the bed.

10. The noise cancellation system of any one of the preceding claims, wherein the plurality of speakers are arranged on a bulkhead proximate to the bed.

11. The noise cancellation system of any one of the preceding claims, wherein the sleeping area further comprises a headboard proximate to the bed, and wherein the plurality of speakers are arranged on the headboard.

12. The noise cancellation system of any one of the preceding claims, wherein the plurality of speakers are arranged on a closeout panel proximate to the bed.

13. The noise cancellation system of any one of the preceding claims, wherein the plurality of speakers are arranged on a personal service unit proximate to the bed.

14. **In** an aircraft that includes a cabin having a bed in a sleeping area, a noise cancellation method comprising:
receiving head position data from a head location sensor in the sleeping area;
receiving engine speed data from the engine sensor during operation of the aircraft;
receiving engine noise signals indicative of engine noise in the sleeping area; and
utilizing the engine noise signals, the head position data from the location sensor, and the engine speed data from the engine sensor to drive a plurality of speakers to generate noise cancellation audio to at least partially cancel engine noise about a head position of the person sleeping in a region above the bed.

15. In an aircraft that includes a cabin having a bed in a sleeping area, a noise cancellation system comprising:
an engine sensor to determine engine speed during operation of the aircraft;
a plurality of microphones, the plurality of microphones arranged proximate to the bed in the sleeping area, the plurality of microphones directed toward a region above the bed in the sleeping area;
a plurality of speakers, the plurality of speakers arranged proximate to the bed in the sleeping area, the plurality of speakers directed toward the region above the bed in the sleeping area;
a location sensor, the location sensor located proximate to the bed in the sleeping area and configured to determine a head position of a person sleeping in the region above the bed; and
a noise cancellation controller, the noise cancellation controller:
coupled to the location sensor to receive head position data from the location sensor;
coupled to the engine sensor to receive engine speed data from the engine sensor during operation of the aircraft;
coupled to the plurality of microphones to receive engine noise signals indicative of engine noise in the sleeping area; and
coupled to the plurality of speakers; and
where the noise cancellation controller is configured to utilize the engine noise signals from the plurality of microphones, the head position data from the location sensor, and the engine speed data from the engine sensor to drive the plurality of speakers to generate noise cancellation audio to at least partially cancel engine noise about the head position of the person sleeping in the region above the bed.
